# EUROPEAN PATENT APPLICATION

(11) **EP 2 884 781 A1**
(43) Date of publication of application: **17.06.2015**
(21) Application number: 13196817.4
(22) Date of filing: 12.12.2013
(51) Int. Cl.: H04W 4/20, H04L 29/08, H04L 29/06

(54) **Computer device for transferring a session of a web-based application to a computer apparatus**

(71) Applicant: Siemens Aktiengesellschaft, 80333 München (DE)
(72) Inventor: Kelm, Michael, 91052 Erlangen (DE); Kramer, Martin, 91058 Erlangen (DE); Meissner, Eugen, 91058 Erlangen (DE); Heimann, Tobias, 91054 Erlangen (DE); Sühling, Michael, 91052 Erlangen (DE); Tsymbal, Alexey, 91052 Erlangen (DE)

(57) **Abstract**

A computer device (10) for transferring a session of a web-based application to a computer apparatus (20) is provided. The computer device (10) comprises a display unit (11) for displaying the web-based application being executed on a streaming server (30), a control unit (12) for generating a session identifier including status information with respect to the actual status of the displayed web-based application, and a communication unit (13) for communicating with the computer apparatus (20) to transfer the actual status of the displayed web-based application from the computer device (10) to the computer apparatus (20) using the generated session identifier.

Using the computer device, an actual status of a web-based application can be transferred from one device to another. Thus, the execution of the same web-based application can be continued at the same point on another device.

Further, a corresponding computer apparatus, a system comprising the computer device and the corresponding computer apparatus and corresponding methods are provided.

## Description

The present invention relates to a computer device for transferring a session of a web-based application to a computer apparatus, to a corresponding computer apparatus and to a system comprising a computer device and a computer apparatus. The present invention further relates to a method for transferring a session of a web-based application to a computer apparatus and to a method for receiving a session of a web-based application from a computer device.

Mobile and network-connected devices have entered the consumer market in the last few years enabling new dimensions of communication and human-machine interaction. Consumers as well as professionals are getting used to flexible access and usage of their data at every time and from everywhere. In particular for applications requiring a high amount of computer resources, executing such applications on a server might be advantageously. The applications executed on the server, also called streaming server, can then be used on different devices like workstations or mobile devices, for example in a web browser. Such streaming server may be used for applications having a high image data rate and requiring a great amount of image processing and thus corresponding processing power and computer resources.

One example for such applications may be the health domain. For instance, radiologists might need to get a second opinion and discuss cases with colleagues or other physicians or physicians, for instance from different disciplines, want to discuss the optimal treatment of patients. In particular for radiologists, radiological images might require a great amount of processing power.

Radiologists may work on fixed reading stations, but it would be advantageously to have the patient data and images on mobile devices and share them with and send them to other physicians. Thus, there may be a need for an easy way to transport patient data and images from a fixed reading station to a mobile device and vice versa.

More general, it may be desirable to exchange any application requiring a high amount of computer resources and processing power between devices. Exchanging such an application may refer not only to data but also to any information of the actual status of the application. However, in current systems, the user can execute the application on one device and can navigate for example through image data. When starting the application on another device, the user has to navigate again to the data of interest.

It is one object of the present invention to provide an improved way of changing between different devices when executing one application.

Accordingly, a computer device for transferring a session of a web-based application to a computer apparatus is provided. The computer device comprises a display unit for displaying the web-based application being executed on a streaming server, a control unit for generating a session identifier including status information with respect to the actual status of the displayed web-based application, and a communication unit for communicating with the computer apparatus to transfer the actual status of the displayed web-based application from the computer device to the computer apparatus using the generated session identifier.

Based on this computer device, all current application session information, for instance including image data and reading information, can be transferred from one device to another quickly.

In the case of radiological data, in current systems the radiologist starts his reading application at his desktop machine and goes through the authorization and login process. Then he opens a new case to start his reading process. If he wants to switch to another device, for instance a smartphone, to continue his reading session of the same case, he has to execute the same process for every device:
1. Start the application
2. Log in or authorize
3. Search for the current patient data
4. Load the data
5. Navigate to the patient data of interest

Using the above computer device, this process can be improved and shortened. The radiologist only needs to generate a session identifier, which can be initiated for instance by clicking a button, and then to communicate with the computer apparatus for transferring the actual status of the displayed web-based application. The actual status may comprise information in view of the actual image data, the position of the cursor, any inputted information or the like.

Computer device in this context may refer for instance to a personal computer or workstation. Computer apparatus may refer for instance to mobile devices like smartphones or tablet PCs but also to any other kind of mobile devices being able to execute a web-based application.

The web-based application may be a server-rendered web application that runs in a web-browser and responds to http(s)-requests. The server may be called a streaming server as it streams the data to the devices.

The provided computer device provides a user-friendly and intuitive handling of switching devices during working with the same application. As the application is web-based, fast loading of running application session and belonging data may be achieved and at the same time, no custom software is required, as the application is executed in a web-browser.

According to an embodiment, the communication unit is adapted to transmit the generated session identifier to the computer apparatus via a communication interface.

The communication interface may be connectable to a corresponding communication interface of the computer apparatus and the streaming server.

The session identifier may be encoded, for example in the form of an URL. The URL may comprise also the web address of the streaming server.

According to a further embodiment, the communication interface is a radio interface.

The radio interface may support Bluetooth, RFID or any other kind of radio transmitting technology. RFID could be used to identify each device, i.e. the computer device and the computer apparatus. Then a server, for example the streaming server, could send the encoded information to the identified client.

Finally, URLs can also easily be sent by e-mail, SMS and instant messages which allow sharing reading sessions through most standard communication means.

According to a further embodiment, the display unit is adapted to display the generated session identifier in the form of a barcode.

A barcode provides a simple way for the computer apparatus to capture the session identifier. The barcode may be any kind of barcode, for instance a two-dimensional barcode. In the barcode, the session identifier and additional information may be encoded. For example, an Internet link in the form of an URL may be encoded in the barcode. The computer apparatus may thus receive information in view of the session as well as information with respect to the streaming server.

Using a barcode may provide an easy way to transfer the session identifier and start the application. For example, the user may click a button in the web-based application to generate a barcode. Then, the user may read the barcode with his computer apparatus, for example tablet or smart phone, which will automatically start the web application with the received session identifier.

According to a further embodiment, the communication unit is adapted to receive a device identifier of the computer apparatus from the computer apparatus and to transmit the device identifier of the computer apparatus and the generated session identifier to the streaming server.

The session identifier is only transmitted to the streaming server. Dependent on the device identifier and the session identifier, the streaming server can provide the web-based application to the computer apparatus. The computer apparatus may already be logged in to the streaming server using its device identifier.

According to a further embodiment, the control unit is adapted to stop displaying the web-based application on the display unit when the generated session identifier is transferred to the computer apparatus.

In this case, the session of the web-based application is only continued on the computer apparatus. Alternatively, both devices may execute the web-based application simultaneously. In this case, changes on the computer device will also be shown on the computer apparatus.

According to a further aspect, a computer apparatus for receiving a session of a web-based application from a computer device as described above is provided. The computer apparatus comprises a communication unit for communicating with the computer device to receive an actual status of the web-based application from the computer device, the web-based application being executed on a streaming server and being displayed on the computer device, and a display unit for displaying the actual status of the web-based application being executed on the streaming server.

The computer apparatus may have the same features as described above in connection with the computer device. After transferring the session of the web-based application from the computer device to the computer apparatus, the user can continue the web-based on the computer apparatus.

The computer apparatus may receive the actual status of the web-based application from the streaming server, either directly or via a session identifier from the computer device.

Should the capabilities of the computer apparatus not be sufficient, the session can easily be transferred from the computer apparatus back to the computer device or to another computer device. This approach can be employed with any device which has a web browser to start the web-based application.

According to a further embodiment, the communication unit is adapted to receive a session identifier including status information with respect to the actual status of the web-based application from the computer device and to send the session identifier to the streaming server in order to receive information from the streaming server in view of the actual status of the web-based application.

According to this embodiment, the computer apparatus logs in to the streaming server using the session identifier. Based on the session identifier, the streaming server provides the actual status of the web-based application to the computer apparatus.

According to a further embodiment, the communication unit is adapted to receive the session identifier from the computer device via a communication interface.

The communication interface of the computer apparatus may correspond to the communication interface of the computer device as described above. As described above, the communication interface may be adapted to provide different kinds of transmission, wireless and wired.

According to a further embodiment, the communication interface is a radio interface.

The radio interface may be adapted to provide different radio transmissions, like RFID-based transmission, NFC-based transmission or any other kind of radio transmission.

According to a further embodiment, the computer apparatus further comprises a capturing unit for capturing the session identifier being displayed on the computer device in the form of a barcode.

The capturing unit may comprise a camera for scanning the barcode. For reading barcodes, which are optically machine-readable labels that can be read with mobile devices, standard applications can be used. Such an application can read and decode such codes and automatically route the encoded URL to the devices' web-browser. In the case of an URL, which is a link to the web-based application on the streaming server, it may encode information such as a session ID, a device ID, a user authorization key and the website where the web-based application is located and accessible. In this way, complete session information can be transferred among devices by just scanning the barcode.

According to a further embodiment, the communication unit is adapted to send a device identifier to the computer device.

According to this embodiment, the computer apparatus can be logged in to the streaming server using its device identifier. Based on this device identifier, the streaming server, which receives the session identifier and the device identifier from the computer device, can determine the computer apparatus and provide the corresponding information in view of the web-based application to the computer apparatus.

According to a further aspect, a system for transferring a session of a web-based application from a computer device to a computer apparatus is provided. The system comprises a computer device as described above, a computer apparatus as described above, and a streaming server executing a web-based application.

The streaming server may be adapted to execute different applications and to provide graphical display information of these applications to the computer device and the computer apparatus. User inputs from the computer device and the computer apparatus are transmitted to the streaming server and processed on the streaming server. Thus, applications requiring a high amount of computer resources can be executed on the streaming server and only the display is transmitted to the computer device and/or computer apparatus.

The streaming server may execute a plurality of applications. Also a plurality of computer devices and/or computer apparatuses can be connected with one streaming server.

According to a further aspect, a method for transferring a session of a web-based application from a computer device to a computer apparatus is provided. The method comprises as a first step displaying the web-based application being executed on a streaming server on a display unit of the computer device. In a second step, a session identifier including status information with respect to the actual status of the displayed web-based application is generated by a control unit of the computer device. In a third step, the computer device communicates by a communication unit with the computer apparatus to transfer the actual status of the displayed web-based application from the computer device to the computer apparatus using the generated session identifier.

According to a further aspect, a method for receiving a session of a web-based application from a computer device is provided. The method comprises as a first step communicating, by a communication unit of a computer apparatus, with the computer device to receive an actual status of the web-based application from the computer device, the web-based application being executed on a streaming server and being displayed on the computer device. In a second step, the actual status of the web-based application being executed on the streaming server is displayed by a display unit of the computer apparatus.

According to a further aspect, the invention relates to a computer program product comprising a program code for executing the above-described method for transferring a session of a web-based application from a computer device to a computer apparatus and/or comprising a program code for executing the above-described method for receiving a session of a web-based application from a computer device when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features described with reference to the computer device, the computer apparatus and the system of the present invention apply mutatis mutandis to the methods of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a first example of a representation of a system for transferring a session of a web-based application;
Fig. 2 shows a second example of a representation of a system for transferring a session of a web-based application;
Fig. 3 shows a third example of a representation of a system for transferring a session of a web-based application;
Fig. 4 shows a fourth example of a representation of a system for transferring a session of a web-based application;
Fig. 5 shows an embodiment of a sequence of method steps for transferring a session of a web-based application to a computer apparatus; and
Fig. 6 shows an embodiment of a sequence of method steps for receiving a session of a web-based application from a computer device.

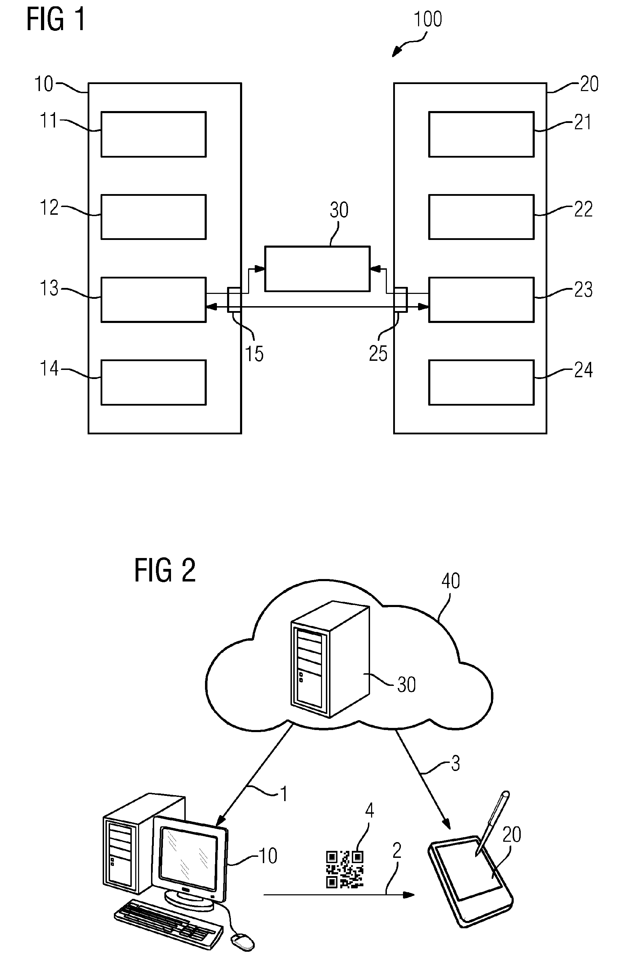

In the Figures, like reference numerals designate like or functionally equivalent elements, unless otherwise indicated. Fig. 1 shows a system 100 comprising a computer device 10 and a computer apparatus 20. The computer device 10 and the computer apparatus 20 each comprise a communication unit 13, 23 and a communication interface 15, 25 to communicate with each other and to communicate with a streaming server 30.

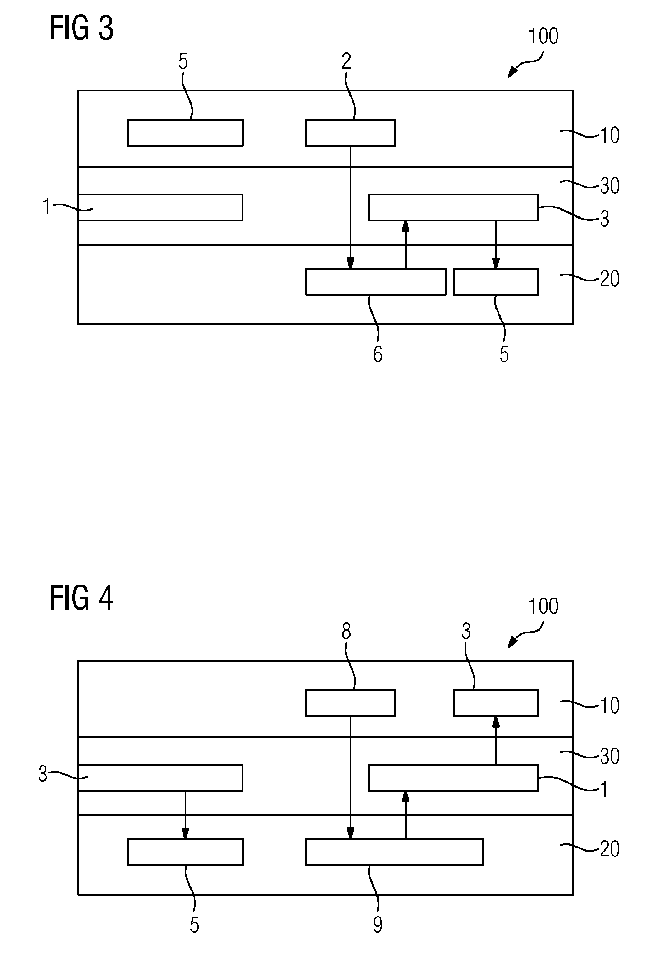

A web-based application being executed on the streaming server 30 is displayed on a display unit 11 of the computer device 10. For transferring a session of the web-based application from the computer device 10 to the computer apparatus 20, a control unit 12 generates a session identifier including status information with respect to the actual status of the displayed web-based application. The session identifier is transmitted to the streaming server 30 or the computer apparatus 20, as will be shown in Figs. 3 and 4.

When the session identifier is shown in the form of a barcode on the display unit 11, the computer apparatus 20 can capture the barcode using the capturing unit. After transferring the session from the computer device 10 to the computer apparatus 20, the actual status of the web-based application is shown on the display unit 21 of the computer apparatus 20.

As the session can be transferred back from the computer apparatus 20 to the computer device 10, the both devices are implemented similarly. Thus, the computer apparatus also comprises a control unit 22 and the computer device also comprises a capturing unit 15.

Fig. 2 illustrates that the streaming server 30 is located within a network 40. The streaming server 30 provides 1 the web-based application as a stream to the computer device 10. After transferring 2 the session identifier in the form of a barcode 4, to the computer apparatus, the streaming server 30 provides 3 the web-based application as a stream to the computer apparatus 20.

Fig. 3 shows an example of the system 100 when transferring the session of the web-based application from the computer device 10 to the computer apparatus 20.

First, the streaming server 30 provides 1 the web-based application to the computer device 10, where the application is displayed 5. The computer device 10 then generates 2 a session identifier and shows the session identifier in the form of a barcode to the computer apparatus 20.

The computer apparatus 20 reads 6 the barcode and sends its device identifier and the session identifier from the barcode to the streaming server 30. In response, the streaming server provides 3 the web-based application to the computer apparatus 20.

On the computer apparatus 20, the current status of the web-based application is shown 5.

Fig. 4 shows an example of the system 100 when transferring the session of the web-based application from the computer apparatus 20 to the computer device 10.

First, the streaming server 30 provides 3 the web-based application to the computer apparatus 20, where the application is displayed 5. The computer device 10 then sends 8 its device identifier in the form of a barcode to the computer apparatus 20.

The computer apparatus 20 reads 9 the barcode and sends the device identifier of the computer device 10 from the barcode and the session identifier to the streaming server 30. In response, the streaming server provides 1 the web-based application to the computer device 10. The computer device 10 is already logged in to the streaming server 30 and thus the streaming server 30 can provide the data to the computer device 10.

On the computer apparatus 20, the current status of the web-based application is shown 5.

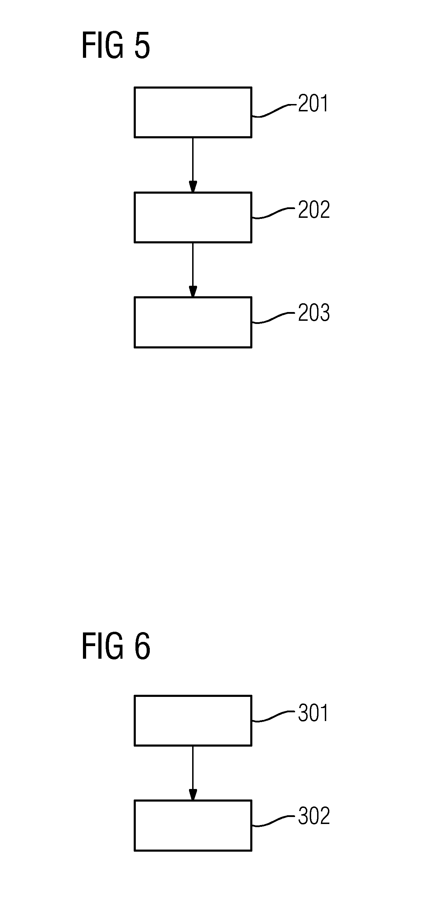

Fig. 5 shows a method for transferring a session of a web-based application from a computer device 10 to a computer apparatus 20.

In a first step 201, the web-based application being executed on a streaming server 30 is displayed on a display unit 11 of the computer device 10. In a second step 202, a session identifier including status information with respect to the actual status of the displayed web-based application is generated by a control unit 12 of the computer device 10.

Then, in a third step 203, a communication unit 13 of the computer device 10 communicates with the computer apparatus 20 to transfer the actual status of the displayed web-based application from the computer device 10 to the computer apparatus 20 using the generated session identifier.

Fig. 6 shows a method for receiving a session of a web-based application from a computer device 10.

In a first step 301, a communication unit 23 of a computer apparatus 20 communicates with the computer device 10 to receive an actual status of the web-based application from the computer device 10, the web-based application being executed on a streaming server 30 and being displayed on the computer device 10.

In a second step 302, a display unit 21 of the computer apparatus 20 displays the actual status of the web-based application being executed on the streaming server 30.

Although the present invention has been described in accordance with preferred embodiments, it is obvious for the person skilled in the art that modifications are possible in all embodiments.

## Claims

1. A computer device (10) for transferring a session of a web-based application to a computer apparatus (20), the computer device (10) comprising:
a display unit (11) for displaying the web-based application being executed on a streaming server (30),
a control unit (12) for generating a session identifier including status information with respect to the actual status of the displayed web-based application, and
a communication unit (13) for communicating with the computer apparatus (20) to transfer the actual status of the displayed web-based application from the computer device (10) to the computer apparatus (20) using the generated session identifier.

2. The computer device (10) according to claim 1,
wherein the communication unit (13) is adapted to transmit the generated session identifier to the computer apparatus (20) via a communication interface (15).

3. The computer device (10) according to claim 2,
wherein the communication interface is a radio interface.

4. The computer device (10) according to one of claims 1 - 3,
wherein the display unit (11) is adapted to display the generated session identifier in the form of a barcode (4).

5. The computer device (10) according to claim 1,
wherein the communication unit (13) is adapted to receive a device identifier of the computer apparatus (20) from the computer apparatus (20) and to transmit the device identifier of the computer apparatus (20) and the generated session identifier to the streaming server (30).

6. The computer device (10) according to one of claims 1 - 5, wherein the control unit (12) is adapted to stop displaying the web-based application on the display unit (11) when the generated session identifier is transferred to the computer apparatus (20).

7. A computer apparatus (20) for receiving a session of a web-based application from a computer device (10) of one of claims 1 - 6, the computer apparatus (20) comprising:
a communication unit (23) for communicating with the computer device (10) to receive an actual status of the web-based application from the computer device (10), the web-based application being executed on a streaming server (30) and being displayed on the computer device (10), and
a display unit (21) for displaying the actual status of the web-based application being executed on the streaming server (30).

8. The computer apparatus (20) according to claim 7, wherein the communication unit (23) is adapted to receive a session identifier including status information with respect to the actual status of the web-based application from the computer device (10) and to send the session identifier to the streaming server (30) in order to receive information from the streaming server (30) in view of the actual status of the web-based application.

9. The computer apparatus (20) according to claim 8, wherein the communication unit (23) is adapted to receive the session identifier from the computer device (10) via a communication interface (25).

10. The computer apparatus (20) according to claim 9, wherein the communication interface (25) is a radio interface.

11. The computer apparatus (20) according to claim 8, further comprising a capturing unit (24) for capturing the session identifier being displayed on the computer device (10) in the form of a barcode (4).

12. The computer apparatus (20) according to claim 7, wherein the communication unit (23) is adapted to send a device identifier to the computer device (10).

13. A system (100) for transferring a session of a web-based application from a computer device (10) to a computer apparatus (20), the system (100) comprising:
a computer device (10) according to one of claims 1 - 6,
a computer apparatus (20) according to one of claims 7 - 12, and
a streaming server (30) executing a web-based application.

14. A method for transferring a session of a web-based application from a computer device (10) to a computer apparatus (20), the method comprising:
displaying (201) the web-based application being executed on a streaming server (30) on a display unit (11) of the computer device (10),
generating (202) a session identifier including status information with respect to the actual status of the displayed web-based application by a control unit (12) of the computer device (10), and
communicating (203), by a communication unit (13) of the computer device (10), with the computer apparatus (20) to transfer the actual status of the displayed web-based application from the computer device (10) to the computer apparatus (20) using the generated session identifier.

15. A method for receiving a session of a web-based application from a computer device (10), the method comprising:
communicating (301), by a communication unit (23) of a computer apparatus (20), with the computer device (10) to receive an actual status of the web-based application from the computer device (10), the web-based application being executed on a streaming server (30) and being displayed on the computer device (10), and
displaying (302), by a display unit (21) of the computer apparatus (20), the actual status of the web-based application being executed on the streaming server (30).
